# EUROPÄISCHE PATENTSCHRIFT

(11) **EP 1 915 250 B1**
(45) Veröffentlichungstag und Bekanntmachung des Hinweises auf die Patenterteilung: **04.03.2009**
(21) Anmeldenummer: 06777928.0
(22) Anmeldetag: 24.07.2006
(51) Int. Cl.: B29C 70/54

(54) **VERFAHREN ZUR HERSTELLUNG VON EIN- ODER MEHRSCHICHTIGEN FASERVORFORMLINGEN**
METHOD FOR PRODUCING ONE- OR MULTILAYER FIBRE PREFORMS
PROCEDE POUR PRODUIRE DES EBAUCHES FIBREUSES MONOCOUCHES OU MULTICOUCHES

(30) Priorität: 22.07.2005 DE 102005034401
(43) Veröffentlichungstag der Anmeldung: 30.04.2008
(73) Patentinhaber: Airbus Deutschland GmbH, 21129 Hamburg (DE)
(72) Erfinder: JÖRN, Paul, 22763 Hamburg (DE); EBERTH, Ulrich, 86641 Rain (DE)
(74) Vertreter: Peckmann, Ralf
(86) Internationale Anmeldenummer: PCT/EP2006/064572
(87) Internationale Veröffentlichungsnummer: WO 2007/010051

(56) Entgegenhaltungen:
- DE-U1-2202004 017 76
- US-A- 5 439 627
- US-A1- 2003 132 543
- US-B1- 6 319 348
- US-B1- 6 837 952
- ANONYMOUS: "Erläuterung zur TFP-Technologie" [Online] 7. März 2005 (2005-03-07), ANONYMOUS , XP002400709 Gefunden im Internet: URL:http://www.hightex-dresden.de/tfptech. pdf> [gefunden am 2006-09-27] Abbildung 4

## Beschreibung

Die Erfindung betrifft ein Verfahren zur Herstellung von ein- oder mehrschichtigen Faservorformlingen im TFP-Verfahren ("Tailored Fiber Placement") mit im Wesentlichen kraftflussorientiert ausgerichteten Fasersträngen, die auf mindestens einer Tragschicht abgelegt und mit mindestens einem Fixierfaden angeheftet werden, wobei der Faservorformling eine nahezu beliebige Materialstärke aufweist.

Im Leichtbau, insbesondere im Flugzeugbau, finden zunehmend Verbundbauteile aus faserverstärkten Kunststoffen Verwendung, die mechanisch extrem belastbar sind und gleichzeitig ein hohes Gewichtseinsparungspotential bieten. Diese Bauteile werden mit Verstärkungsfasern gebildet, die anschließend zur Bildung des fertigen Bauteils mit einem aushärtbaren Kunststoffmaterial, beispielsweise einem Polyesterharz, einem Epoxydharz oder dergleichen durchtränkt bzw. imprägniert werden. Dokument US 2003/0132543 A1 bescheibt solche Verfahren.

Die Ausrichtung der Verstärkungsfasern in einem derartigen Bauteil hat maßgeblichen Einfluss auf dessen Steifigkeit und Festigkeit. Die Verstärkungsfasern sollten, um optimale mechanische Eigenschaften zu erreichen, wenn möglich der Belastungsrichtung folgen und keine Welligkeit aufweisen. Darüber hinaus ist eine gleichmäßige Beanspruchung jeder einzelnen Verstärkungsfaser anzustreben.

Mit konventionellen Halbzeugen, wie z. B. Geweben oder Gelegen zur Verstärkung des Kunststoffmaterials, sind nicht alle denkbaren Faserorientierungen realisierbar, da die Verstärkungsfasern dort im Allgemeinen in einer bestimmten, festgelegten Orientierung angeordnet sind. Fasergelege lassen sich zwar "drapieren", das heißt in der Ebene ohne Faltenwurf beispielsweise zu Kreisringsegmenten ablegen, doch lassen sich die Verstärkungsfasern im Allgemeinen nicht dem Verlauf komplexerer Kraftflusslinien angleichen.

Eine Möglichkeit der Forderung nach einer belastungsgerechten Faserausrichtung nachzukommen ist das bekannte TFP-Verfahren. Hierbei werden Faserstränge zur mechanischen Verstärkung ("Rovings"), die wiederum mit einer Vielzahl von parallel zueinander verlaufenden diskreten Verstärkungsfasern gebildet sind, entlang einer beliebigen Bahnkurve abgelegt und mit Hilfe eines Fixierfadens auf einer Tragschicht zur Bildung eines Faservorformlings ("Preform") angeheftet, wodurch die Ausrichtung der einzelnen Faserstränge nahezu optimal den auf das fertige Verbundbauteil einwirkenden Kräften anpassbar ist. Die Fixierung erfolgt hierbei durch einen Fixieroberfaden und einen Fixierunterfaden, die miteinander unterhalb der Tragschicht - in Entsprechung zu konventionellen Nähverfahren - miteinander verkettet werden. Die Anheftung der Faserstränge erfolgt hierbei vorzugsweise mit Zickzackstichen. Durch die so erzielte optimale Ausnutzung der mechanischen Belastbarkeit der Faserstränge kann deren Anzahl und somit auch das Gewicht minimiert werden. Zudem kann der Bauteilquerschnitt den jeweiligen lokalen Belastungen in idealer Weise angepasst werden. Weiterhin lassen sich gezielt Verstärkungen in besonders beanspruchten Zonen, wie zum Beispiel Krafteinleitungsbereichen oder dergleichen, durch die Ablage von zusätzlichen Fasersträngen bilden. Die diskreten Verstärkungsfasern sind beispielsweise mit Glasfasern, Kohlefasern, Aramidfasern oder dergleichen gebildet.

Die Fertigung von Faservorformlingen mittels des TFP- Verfahrens erfolgt auf üblichen CNC- gesteuerten Näh- bzw. Stickautomaten, die beispielsweise auch in der Textilindustrie Verwendung finden. Sind alle erforderlichen Lagen mit Fasersträngen abgelegt, so wird der fertige Faservorformling, der in der Regel schon die gewünschte Endkontur aufweist, in eine verschließbare Form eingelegt, mit einem aushärtbaren Kunststoffmaterial imprägniert und abschließend zum fertigen Verbundbauteil ausgehärtet. Hierbei können mehrere TFP- Faservorformlinge und/oder Lagen aus Verstärkungsgeweben kombiniert werden. Mehrschichtige Faservorformlinge werden durch das Übereinanderschichten von mehreren (einfachen, einschichtigen) Faservorformlingen gebildet, so dass höhere Materialstärken realisierbar sind, die ansonsten aufgrund der begrenzten Nadellänge in den für das TFP-Verfahren benutzten Näh- bzw. Stickautomaten nicht gefertigt werden könnten. Mehrschichtige Faservorformlinge weisen demgemäß mindestens zwei, innerhalb des mehrschichtigen Faservorformlings in etwa parallel zueinander verlaufende Tragschichten auf.

Die Imprägnierung der Faservorformlinge mit dem aushärtbaren Kunststoffmaterial kann beispielsweise mittels des bekannten RTM-Verfahrens ("Resin Transfer Moulding") in einer entsprechend gestalteten verschließbaren Form erfolgen.

Durch das TFP-Verfahren werden jedoch mit dem Fixierfaden und der Tragschicht zwei Elemente in den Faservorformling eingebracht, die im späteren Verbundbauteil keine Funktion, insbesondere keine Tragfunktion, mehr erfüllen. Sowohl die Tragschicht als auch die Fixierfäden verursachen vielmehr Probleme bei der Realisierung einer idealen Lagenabfolge und stellen zudem einen nicht zu vernachlässigenden Anteil am Gesamtgewicht dar, insbesondere wenn mehrere Faservorformlinge übereinander geschichtet werden oder einschichtige Faservorformlinge mit hoher Materialstärke durch eine Vielzahl von übereinander liegenden Fasersträngen gebildet werden. Zwar kann die Tragschicht selbst auch mit einem Verstärkungsgewebe, zum Beispiel mit einem Glas- oder Kohlefasergewebe gebildet sein, doch auch in diesem Fall weist zumindest ein Teil der Verstärkungsfasern eine nicht belastungsgerechte Ausrichtung auf. Zudem wird auch das Verstärkungsgewebe durch die Penetrierung mit der Nähnadel während des TFP-Verfahrens beeinträchtigt, so dass die Werkstoffkennwerte beeinträchtigt werden können. Um die erwähnten Schwierigkeiten zu vermeiden, können die Fixierfäden beispielsweise mit einem leicht aufschmelzbaren Material gebildet werden, doch ergibt sich hierdurch ein undefinierter Materialeintrag in den Faservorformling, der die mechanischen Eigenschaften der mittels Imprägnierung mit einem aushärtbaren Kunststoffmaterial gebildeten Matrix im späteren Verbundbauteil beeinträchtigen kann.

Aufgabe der Erfindung ist es, ein Verfahren zu schaffen, mit dem ein- oder mehrschichtige Faservorformlinge mit einer nahezu beliebigen Materialstärke ohne den störenden Einfluss des für das TFP-Verfahren im Allgemeinen notwendigen Fixierfadens und/oder der im Allgemeinen erforderlichen Tragschicht erstellt werden können.

Die erfindungsgemäße Aufgabe wird durch ein Verfahren mit den Merkmalen des Kennzeichens des Patentanspruchs 1 gelöst.

Dadurch, dass mindestens ein Faservorformling nach der Beendigung des TFP-Verfahrens in eine Fixiervorrichtung zur Sicherung der Position der Faserstränge innerhalb des Faservorformlings eingebracht wird und der Fixierfaden oder die Fixierfäden und/oder die Tragschicht oder die Tragschichten zumindest teilweise entfernt werden,
lassen sich mittels des erfindungsgemäßen Verfahrens im Idealfall sämtliche Fixierfäden und Tragschichten, die im späteren Verbundbauteil keine Funktion mehr erfüllen, aus dem Faservorformling entfernen.
Hierdurch weist der mit dem erfindungsgemäßen Verfahren hergestellte Faservorformling nahezu ideale, "quasiisotrope" mechanische Eigenschaften auf. Insbesondere werden Störstellen im Faservorformling infolge der Vernähung der Faserstränge mit den Fixierfäden, die zu gewellten Fasersträngen etc. führen können, sowie Inhomogenitäten im Faservorformling durch Knotenbildungen und Schlaufenbildungen zwischen den Fixieroberfäden und den Fixierunterfäden vermieden. Entsprechend vorteilhaft wirkt sich die Entfernung der Tragschichten aus, da diese im späteren Verbundbauteil bevorzugte Delaminationsbereiche darstellen. Darüber hinaus ergibt sich durch das Entfernen des Fixierfadens und der Tragschicht eine beträchtliche Gewichtseinsparung. Die vorgenannten vorteilhaften Effekte treten insbesondere bei mehrschichtigen Faservorformlingen noch stärker in den Vordergrund.
Die Fixiervorrichtung ist vorzugsweise derart ausgebildet, dass sie die Lage der Faserstränge während der Entfernung der Fixierfäden und/oder der Tragschichten zueinander zuverlässig sichert und gleichzeitig dem Faservorformling eine geometrische Gestalt verleiht, die möglichst genau dem später aus dem Faservorformling mittels Harzimprägnierung zu fertigenden Verbundbauteil entspricht.

Nach einer vorteilhaften Ausgestaltung des erfindungsgemäßen Verfahrens werden der Fixierfaden oder die Fixierfäden und/oder die Tragschicht oder die Tragschichten mit einem chemisch und/oder physikalisch entfernbaren Material, insbesondere mit einem auflösbaren Material, gebildet.
Hierdurch können sowohl die Fixierfäden als auch die Tragschichten auf einfache Art und Weise aus dem Faservorformling entfernt bzw. herausgelöst werden.

Nach einer weiteren vorteilhaften Ausgestaltung ist vorgesehen, dass der Fixierfaden oder die Fixierfäden und/oder die Tragschicht oder die Tragschichten durch Auflösen und Herausspülen entfernt werden, wobei die Fixiervorrichtung von einem Lösungsmittel, insbesondere von Wasser als Lösungsmittel, durchströmt wird.
Durch das Entfernen der Fixierfäden und/oder der Tragschicht bei einem einschichtigen Faservorformling bzw. der Tragschichten bei einem mehrschichtigen Faservorformling durch die Auflösung des Fixierfaden- und Tragschichtmaterials mit einem geeigneten Lösungsmittel, insbesondere mit Wasser, und dem anschließenden Herausspülen des gelösten Fixierfaden- und Tragschichtmaterials lässt sich eine nahezu vollständige Entfernung der Fixierfäden und/oder der Tragschicht oder der Tragschichten erzielen. Hierbei weist insbesondere Wasser als Lösungsmittel den Vorteil auf, dass eine Wechselwirkung mit den Verstärkungsfasern im Faservorformling, die zu einer Beeinträchtigung der mechanischen Eigenschaften führen kann, in der Regel nicht eintritt. Insbesondere beeinflusst Wasser als Lösungsmittel im Wesentlichen nicht die Eigenschaften der auf die Verstärkungsfasern üblicherweise aufgebrachten Schlichte zur Verbesserung der Anbindung der Verstärkungsfasern an die Harzmatrix. Darüber hinaus ist Wasser als Lösungsmittel durch die Zufuhr von Wärme schnell und vor allem rückstandsfrei aus dem Faservorformling auszutreiben. Ferner lässt sich Wasser als Lösungsmittel leicht und gefährdungsfrei handhaben. Bevorzugt werden der Fixierfaden oder die Fixierfäden und/oder die Tragschicht oder die Tragschichten mit einem wasserlöslichen Kunststoffmaterial gebildet. Als wasserlösliche Fixierfäden können beispielsweise die Fäden mit der Bezeichnung SOLVRON^{®} Sewing Thread SX 100T/1x3 sowie SOLVRON^{®} SF 62dtex der Firma NITIVY Co. LTD. Tokyo, Japan eingesetzt werden. Werden die Fixierfäden und/oder die Tragschichten dagegen mit einem wasserunlöslichen Material ausgebildet, ist es erforderlich anstatt von Wasser alternative Lösungsmittel einzusetzen.

In Gemäßheit einer weiteren vorteilhaften Ausgestaltung des erfindungsgemäßen Verfahrens wird der Faservorformling in der Fixiervorrichtung durch Wärmezufuhr nach dem Entfernen des Fixierfadens oder der Fixierfäden und/oder dem Entfernen der Tragschicht oder der Tragschichten getrocknet.
Hierdurch kann das zum Auflösen und zum Herausspülen der Fixierfäden und/oder der Tragschichten eingesetzte Lösungsmittel vorzugsweise vollständig aus dem Faservorformling entfernt werden, so dass eine Beeinträchtigung der Eigenschaften des Faservorformlings weitgehend ausgeschlossen ist.

Nach Maßgabe einer weiteren vorteilhaften Ausgestaltung des Verfahrens erfolgt in der Fixiervorrichtung die Imprägnierung des Faservorformlings mit einem aushärtbaren Kunststoffmaterial, insbesondere nach Maßgabe des RTM-Verfahrens mit einem Epoxydharz, mit einem Polyesterharz oder dergleichen, zur Herstellung des fertigen Verbundbauteils.
Hierdurch kann die Fixiervorrichtung in vorteilhafter Weise gleichzeitig als verschließbare Form zur Herstellung des fertigen Verbundbauteils mittels des RTM-Verfahrens benutzt werden. Dies ist insbesondere von. Vorteil, weil die für das RTM-Verfahren benutzten verschließbaren Formen im Allgemeinen auch über eine Heizeinrichtung verfügen, die somit gleichzeitig zum Trocknen des Faservorformlings eingesetzt werden kann. Weiterhin verfügen die für das RTM-Verfahren benutzten Formen zusätzlich über eine Vakuumeinrichtung, mit der der Trocknungsprozess beschleunigt werden kann.

Eine weitere vorteilhafte Ausbildung des erfindungsgemäßen Verfahrens sieht vor, dass in der Fixiervorrichtung mindestens zwei Faservorformlinge zur Bildung eines mehrschichtigen Faservorformlings angeordnet werden.
Infolge der Anordnung mehrerer (einfacher, einlagiger, einschichtiger) Faservorformlinge lassen sich so genannte mehrschichtige Faservorformlinge mit einer höheren Materialstärke bilden. Diese mehrschichtigen Faservorformlinge weisen demzufolge mehrere Tragschichten und mehrere Fixierfäden auf.

Dadurch, dass der Fixierfaden mit einem chemisch und/oder physikalisch entfernbaren Material, insbesondere mit einem wasserlöslichen Material, gebildet ist, lässt sich dieser auf einfache Art und Weise vorzugsweise vollständig aus dem Faservorformling entfernen. Bevorzugt ist der Fixierfaden mit einem leicht wasserlöslichen Kunststoffmaterial gebildet. Als wasserlösliche Fixierfäden können beispielsweise die Fäden mit der Bezeichnung SOLVRON^{®} Sewing Thread SX 100T/1x3 sowie SOLVRON^{®} SF 62dtex der Firma NITIVY Co. LTD. Tokyo, Japan eingesetzt werden.

Dadurch, dass die Tragschicht mit einem chemisch und/oder physikalisch entfernbaren Material, insbesondere mit einem wasserlöslichen Material, gebildet ist, lässt sich diese auf einfache Art und Weise vorzugsweise vollständig aus dem Faservorformling entfernen. In einer besonders bevorzugten Ausführungsvariante sind die Tragschicht oder die Tragschichten mit einem leicht wasserlöslichen Kunststoffmaterial gebildet. Zur Bildung der Tragschicht können ebenfalls die Fäden SOLVRON^{®} Sewing Thread SX 100T/1x3 sowie SOLVRON^{®} SF 62dtex der Firma NITIVY Co. LTD., Tokyo, Japan eingesetzt werden.

In der Zeichnung zeigt:
- **Fig. 1**: eine schematische Querschnittsdarstellung durch einen einschichtigen Faservorformling und
- **Fig. 2**: eine schematische Querschnittsdarstellung durch einen mehrschichti- gen Faservorformling, bei dem die Fixierfäden und die Tragschichten mittels des erfindungsgemäßen Verfahrens vollständig heraus gespült wurden.

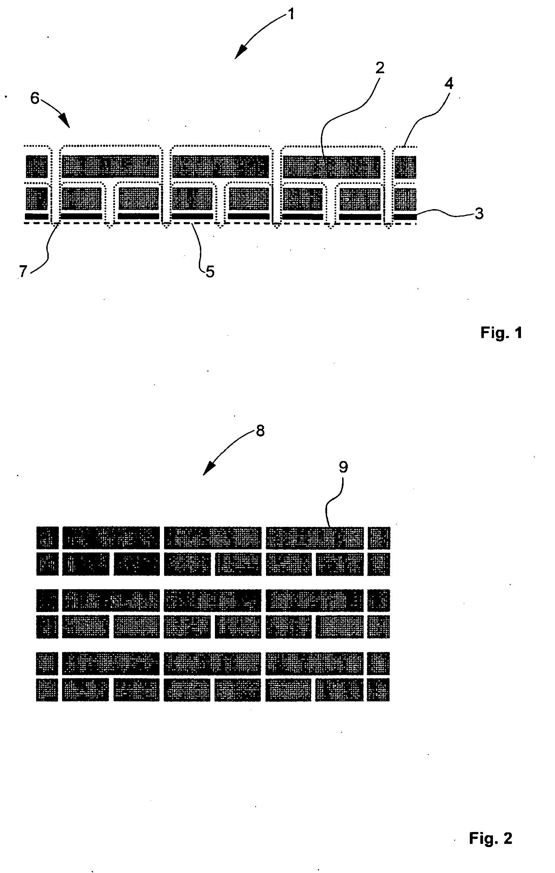

Das erfindungsgemäße Verfahren soll im Weiteren anhand der Fig. 1 und Fig. 2 näher erläutert werden.

Die **Fig. 1** zeigt eine schematische Querschnittsdarstellung des prinzipiellen Aufbaus eines einschichtigen Faservorformlings 1. Der Faservorformling 1 weist eine Vielzahl von Fasersträngen auf, von denen lediglich ein, für die Übrigen repräsentativer Faserstrang 2 mit einer Bezugsziffer versehen wurde. Die Faserstränge sind wiederum mit einer Vielzahl von gleichfalls nicht näher bezeichneten Verstärkungsfasern gebildet, die im Wesentlichen senkrecht zur Zeichnungsebene verlaufen. Als Verstärkungsfasern kommen beispielsweise Glasfasern, Kohlefasern oder Aramidfasern in Betracht.

Die Faserstränge werden in einem ersten Verfahrensschritt zunächst mittels des bekannten TFP-Verfahrens ("Tailored Fiber Placement") vorzugsweise kraftflussorientiert auf einer Tragschicht 3 abgelegt und mit einem Fixieroberfaden 4 sowie einem Fixierunterfaden 5 als Fixierfäden 6 angeheftet. Der Fixieroberfaden 4 bildet unterhalb der Tragschicht 3 Schlaufen, von denen lediglich eine für die Übrigen repräsentative Schlaufe 7 der besseren zeichnerischen Übersichtlichkeit halber mit einer Bezugsziffer versehen wurde. Der Fixierunterfaden 5 durchläuft sämtliche Schlaufen, einschließlich der Schlaufe 7, so dass sämtliche Faserstränge zur Sicherung gegen Verschiebungen auf der Tragschicht angeheftet sind. Die Ablage und das Anheften der Faserstränge erfolgt hierbei mit bekannten CNC- Näh- bzw. Stickautomaten, mit denen sich nahezu beliebige Ablagekurven der Faserstränge auf der Tragschicht 3 bilden lassen. Die Führung der abzulegenden Faserstränge sowie deren Anheftung auf der Tragschicht 3 erfolgt mittels eines nicht dargestellten Nähkopfes, der in mindestens zwei Dimensionen des Raumes rechnergesteuert von dem Näh- bzw. Stickautomaten positionierbar ist.

Alternativ kann der Faservorformling 1 auch mittels des so genannten "Tufting"-Verfahrens abgelegt und zusammen geheftet werden. In diesem Fall kommt nur ein Fixieroberfaden 4 zum Einsatz, der unmittelbar in einer geeignet ausgewählten Tragschicht 3 durch Einklemmen fixiert wird. Der Fixierunterfaden 5 zum Befestigen des Fixieroberfadens 4 unterhalb der Tragschicht 3 durch Verkettung bzw. Schlaufenbildung mit dem Fixeroberfaden 4 sowie eine Fixierunterfadenführung sind damit entbehrlich. Als Tragschicht 3 kommt beispielsweise eine flexible und elastische Gummiplatte, ein Schaumkunststoff oder dergleichen zum Einsatz, in der der Fixieroberfaden 4 mit der Nadel zumindest oberflächlich eingeführt wird. Die sich nach dem Zurückziehen der Nadel in der Gummiplatte bildenden Fixieroberfadenschlaufen werden innerhalb der Gummiplatte festgehalten und damit fixiert.

Diese Vorgehensweise weist insbesondere den Vorteil auf, dass die Tragschicht 3 nicht mittels des erfindungsgemäßen Verfahrens aufgelöst werden muss, da sich diese ohne eine nennenswerte Beschädigung der Verstärkungsfasern vor der Auflösung und dem Herausspülen der Fixierfäden 6 in der Fixiervorrichtung von dem Faservorformling 1 ablösen lässt.

Durch die Übereinanderschichtung mehrerer Faservorformlinge 1 nach Maßgabe der Darstellung in der Fig. 1, lassen sich erforderlichenfalls auch so genannte mehrschichtige Faservorformlinge zur Herstellung von Verbundbauteilen mit einer höheren Materialstärke bilden, die sich ansonsten aufgrund der begrenzten Nadellänge mit dem TFP-Verfahren nicht fertigen ließen.

Der Faservorformling 1 wird mittels des TFP-Verfahrens zumindest mit auflösbaren Fixierfäden 6, das heißt insbesondere mit einem auflösbaren Fixieroberfaden 4 und einem auflösbaren Fixierunterfaden 5, auf der Tragschicht 3 mit mehreren Lagen aufgebaut. Darüber hinaus ist es möglich, auch für die Bildung der Tragschicht 3 ein derartiges, durch Auflösen entfernbares Material einzusetzen. In Betracht kommen in diesem Zusammenhang insbesondere wasserlösliche Materialien, die ein leichtes Herausspülen des Materials der aufgelösten Fixierfäden 6 und/oder der Tragschicht 3 mit Wasser und zudem eine schnelle sowie rückstandsfreie Trocknung durch Wärmezufuhr ermöglichen. Weiterhin hat Wasser als Lösungsmittel den Vorteil, dass eine Beeinträchtigung der Eigenschaften der Verstärkungsfasern in den Fasersträngen in der Regel nicht auftritt. Insbesondere wird die auf die Verstärkungsfasern üblicherweise aufgetragene Schlichte zur Verbesserung der mechanischen Anbindung der Verstärkungsfasern an die umgebende Harzmatrix des späteren fertigen Verbundbauteils nicht angegriffen.

Die **Fig. 2** zeigt eine schematische Querschnittsdarstellung durch einen mehrschichtigen Faservorformling 8, bei dem sowohl die Fixierfäden als auch die Tragschichten in einer geeigneten Fixiervorrichtung in einem zweiten Verfahrenschritt vollständig entfernt wurden. Die Entfernung der Fixierfäden und der Tragschichten erfolgt durch das Auflösen der Fixierfäden und der Tragschichten mittels eines geeigneten Lösungsmittels und das anschließende vorzugsweise vollständige Herausspülen des gelösten Fixierfaden- und Tragschichtmaterials mit dem Lösungsmittel.

Die Abstände zwischen den Fasersträngen in Fig. 2 sind aus Gründen der besseren zeichnerischen Darstellbarkeit mit erhöhter Breite dargestellt. In den schmalen vertikalen und horizontalen Zwischenräumen verliefen die Fixierfäden, während in den breiten horizontalen Zwischenräumen die Tragschichten angeordnet waren. In der Realität liegen die Faserstränge nach dem Entfernen der Fixierfäden und/oder der Tragschichten durch Auflösen und Herausspülen im Wesentlichen spaltfrei unmittelbar aneinander an, sodass sich im späteren Verbundbauteil ein sehr hoher Faservolumenanteil von 50% und mehr einstellt. Aus der Vielzahl von Fasersträngen wurde der besseren zeichnerischen Übersicht halber lediglich ein, für die restlichen Faserstränge repräsentativer Faserstrang 9 herausgegriffen und mit einer Bezugsziffer versehen.

Der Faservorformling 8 ist mehrschichtig aufgebaut, das heißt aus insgesamt drei, jeweils in Entsprechung zum Faservorformling 1 aufgebauten und übereinander angeordneten Faservorformlingen mit jeweils zwei Lagen aus Fasersträngen mit Verstärkungsfasern gebildet, wobei sämtliche Fixierfäden und Tragschichten durch Herausspülen mit dem Lösungsmittel eliminiert wurden.

Hierdurch weist der Faservorformling 8 nahezu optimale mechanische, quasi isotrope Eigenschaften auf. Insbesondere treten keinerlei Welligkeiten der Faserstränge auf, die im Allgemeinen durch das Anheften derselben auf den Tragschichten mittels der Fixierfäden entstehen. Weiterhin werden Störstellen in der Faseranordnung des Faservorformlings 8 durch das Herausspülen vollständig eliminiert, da die zwischen den Fixieroberfäden und den Fixierunterfäden gebildeten Verknotungen, Schlaufen sowie die Tragschichten einfach aufgelöst werden.

Um das vollständige Auflösen und Herausspülen der Fixierfäden und/oder der Tragschichten zu ermöglichen, werden diese vorzugsweise mit chemisch und/oder physikalisch leicht entfernbaren Materialien, insbesondere mit durch geeignete Lösungsmittel leicht und schnell auflösbaren und heraus spülbaren Kunststoffmaterialien oder dergleichen, hergestellt. Bevorzugt werden wasserlösliche Kunststoffmaterialien zur Bildung der Fixierfäden und/oder der Tragschichten eingesetzt, die die Verwendung von Wasser als Lösungsmittel erlauben. Als wasserlösliche Fixierfäden können beispielsweise die Fäden mit der Bezeichnung SOLVRON^{®} Sewing Thread SX 100T/1x3 sowie SOLVRON^{®} SF 62dtex der Firma NITIVY Co. LTD. Tokyo, Japan eingesetzt werden.
Alternativ können, in Abhängigkeit von dem für die Fixierfäden und/oder der Tragschicht verwendeten Material, auch andere Lösungsmittel, wie zum Beispiel organische Lösungsmittel, Chlorkohlenwasserstoffe oder dergleichen, verwendet werden.

Das Auflösen und das anschließende Herausspülen der Fixierfäden und/oder Tragschichten erfolgt in einer nicht näher dargestellten Fixiervorrichtung. Die Fixiervorrichtung dient zum einem dazu, die Form des Faservorformlings 8 während des Ausspülprozesses im Wesentlichen beizubehalten und somit Verschiebungen der Faserstränge zu vermeiden. Zum anderen hat die Fixiervorrichtung die Aufgabe, einen möglichst gleichmäßigen und alle Bereiche des Faservorformlings durchsetzenden Lösungsmittelfluss zu gewährleisten.

Um das Auflösen und Herausspülen der Fixierfäden und/oder der Tragschichten zu ermöglichen, weist die Fixiervorrichtung zum Beispiel mindestens einen Zufluss und mindestens einen Abfluss für das bevorzugt als Lösungsmittel eingesetzte Wasser auf. Hierbei kann das Lösungsmittel auch in einem geschlossenen Kreislauf geführt werden, was im Allgemeinen ein Herausfiltern der gelösten Materialpartikel der Fixierfäden und/oder der Tragschicht erfordert. Um den Eintrag von Fremdstoffen, insbesondere in der Form von gelösten Mineralien oder dergleichen, in den Faservorformling 8 zu vermeiden, kann es erforderlich sein, destilliertes Wasser als Lösungsmittel einzusetzen.

Zur anschließenden Trocknung des Faservorformlings 8 in einem dritten Verfahrensschritt verbleibt dieser in besonders vorteilhafter Weise in der Fixiervorrichtung, die dann zum Trocknen des Faservorformlings 8 mittels einer Heizeinrichtung erwärmt wird. Mittels der Heizeinrichtung lässt sich beispielsweise als Lösungsmittel benutztes Wasser vollständig aus dem Faservorformling 8 austreiben. Um den

Trocknungsprozess weiter zu beschleunigen, kann zusätzlich ein Unterdruck an die Fixiervorrichtung angelegt werden.

In einem vierten Verfahrensschritt wird der auf diese Weise getrocknete Faservorformling 8 beispielsweise mittels des bekannten RTM-Verfahrens ("Resin Moulding Transfer") mit einem aushärtbaren Kunststoffmaterial, beispielsweise einem Epoxydharz, einem Polyesterharz, einem BMI-Harz oder dergleichen, zur Herstellung eines fertigen Verbundbauteils imprägniert bzw. durchtränkt. In besonders bevorzugter Weise erfolgt auch dieser Verfahrenschritt innerhalb der Fixiervorrichtung, die dann gleichzeitig als verschließbare Form im Rahmen des RTM-Verfahrens dient bzw. ausgebildet ist, so dass unter anderem undefinierte Verformungen des Faservorformlings 8, die die Maßhaltigkeit des fertigen Verbundbauteils beeinträchtigen könnten, weitgehend vermieden werden.

Diese Vorgehensweise weist darüber hinaus insbesondere die vorteilhafte Wirkung auf, dass die verschließbaren Formen für die Durchführung des RTM-Verfahrens üblicherweise eine Heizeinrichtung aufweisen, die gleichzeitig zum Trocknen des Faservorformlings 8 nach dem Ausspülen im dritten Verfahrensschritt benutzt werden kann. Entsprechend kann auch eine bei der Durchführung des RTM-Verfahrens im Allgemeinen vorhandene Vakuumeinrichtung zur weiteren Beschleunigung des Trocknungsprozesses des Faservorformlings 8 dienen.

Verbundbauteile, die mit einem nach Maßgabe des erfindungsgemäßen Verfahrens gebildeten Faservorformling hergestellt werden, weisen nahezu optimale, das heißt insbesondere eine im Wesentlichen kraftflussorientierte Ausrichtung der Verstärkungsfasern ohne Störstellen in Form von Knoten und Schlaufen sowie Welligkeiten auf und sind somit hinsichtlich ihrer physikalischen Eigenschaften als "quasiisotrop" anzusehen. Zudem können die Verbundbauteile mit nahezu beliebigen Materialstärken ohne störende Tragschichten gefertigt werden.

Die Erfindung betrifft demnach ein Verfahren zur Herstellung von ein- oder mehrschichtigen Faservorformlingen 1, 8 im TFP-Verfahren mit im Wesentlichen kraftflussorientiert ausgerichteten Fasersträngen 2, 9, die auf mindestens einer Tragschicht 3 abgelegt und mit mindestens einem Fixierfaden 6 angeheftet werden, wobei der Faservorformling 1, 8 eine nahezu beliebige Materialstärke aufweist, wobei mindestens ein Faservorformling 1, 8 nach der Beendigung des TFP-Verfahrens in eine Fixiervorrichtung zur Sicherung der Position der Faserstränge 2, 9 innerhalb des Faservorformlings 1, 8 eingebracht wird und der Fixierfaden 6 oder die Fixierfäden 6 und/oder die Tragschicht 3 oder die Tragschichten 3 zumindest teilweise entfernt werden.

Der Fixierfaden 6 oder die Fixierfäden 6 und/oder die Tragschicht 3 oder die Tragschichten 3 werden vorzugsweise mit einem chemisch und/oder physikalisch entfernbaren Material, insbesondere mit einem auflösbaren Material, gebildet.

Der Fixierfaden 6 oder die Fixierfäden 6 und/oder die Tragschicht 3 oder die Tragschichten 3 werden insbesondere durch Auflösen und Herausspülen entfernt werden, wobei die Fixiervorrichtung von einem Lösungsmittel, insbesondere von Wasser als Lösungsmittel, durchströmt.

Nach dem Entfernen des Fixierfadens 6 oder der Fixierfäden 6 und/oder dem Entfernen der Tragschicht 3 oder der Tragschichten 3 wird vorteilhaft derFaservorformling 1, 8 in der Fixiervorrichtung durch Wärmezufuhr getrocknet.wird.

In der Fixiervorrichtung erfolgt die Imprägnierung des Faservorformlings 1, 8 vorteilhaft mit einem aushärtbaren Kunststoffmaterial, insbesondere nach Maßgabe des RTM-Verfahrens mit einem Epoxydharz, mit einem Polyesterharz oder dergleichen, zur Herstellung des fertigen Verbundbauteils.

In der Fixiervorrichtung werden vorzugsweise mindestens zwei Faservorformlinge 1, 8 zur Bildung eines mehrschichtigen Faservorformlings angeordnet.

Dieser Fixierfaden ist vorteilhaft mit einem chemisch und/oder physikalisch entfernbaren Material, insbesondere mit einem wasserlöslichen Kunststoffmaterial, gebildet.

Die Tragschicht ist insbesondere mit einem chemisch und/oder physikalisch entfernbaren Material, insbesondere mit einem wasserlöslichen Kunststoffmaterial, gebildet.

### Bezugszeichenliste

- 1: Faservorformling
- 2: Faserstrang
- 3: Tragschicht
- 4: Fixieroberfaden
- 5: Fixierunterfaden
- 6: Fixierfäden
- 7: Schlaufe
- 8: Faservorformling
- 9: Faserstrang

## Patentansprüche

1. Verfahren zur Herstellung von ein- oder mehrschichtigen Faservorformlingen (1,8) im TFP-Verfahren mit im Wesentlichen kraftflussorientiert ausgerichteten Fasersträngen (2,9), umfassend die Schritte:
a) die Faserstränge (2,9) werden zur Bildung eines Faservorformlings (1,8) auf einer Tragschicht (3) abgelegt und mit einem Fixierfaden (6) angeheftet, wobei der Fixierfaden und/oder die Tragschicht mit einem wasserlöslichen Material gebildet sind und der Faservorformling (1,8) eine nahezu beliebige Materialstärke aufweist,
b) mindestens ein Faservorformling (1,8) wird nach der Beendigung des TFP-Verfahrens in eine Fixiervorrichtung zur Sicherung der Position der Faserstränge (2,9) innerhalb des mindestens einen Faservorformlings (1,8) eingebracht,
c) die Fixiervorrichtung wird von Wasser als Lösungsmittel durchströmt, um den mindestens einen Fixierfaden (6) und/oder die mindestens eine Tragschicht (3) durch Auflösen und Herausspülen zu entfernen, wobei das Wasser in einem geschlossenen Kreislauf über einen Zufluss und einen Abfluss durch die Fixiereinrichtung geführt und gefiltert wird,
d) nach dem Entfernen des mindestens einen Fixierfadens (6) und/oder dem Entfernen der mindestens einen Tragschicht (3) wird der mindestens eine Faservorformling (1,8) in der Fixiervorrichtung durch Wärmezufuhr getrocknet, und
e) in der Fixiervorrichtung erfolgt die Imprägnierung des mindestens einen Faservorformlings (1,8) nach Maßgabe des RTM-Verfahrens mit einem Epoxydharz zur Herstellung des fertigen Verbundbauteils.

2. Verfahren nach Anspruch 1, **dadurch gekennzeichnet, dass** der mindestens eine Fixierfaden (6) und/oder die mindestens eine Tragschicht (3) mit dem Faden SOLVRON^{®} Sewing Thread SX 100T/1x3 oder SOLVRON^{®} SF 62dtex gebildet werden.

3. Verfahren nach Anspruch 1 oder 2, **dadurch gekennzeichnet, dass** in der Fixiervorrichtung mindestens zwei Faservorformlinge (1,8) zur Bildung eines mehrschichtigen Faservorformlings angeordnet werden.

## Claims

1. A Method for producing single- or multi-layered fibre preforms (1, 8) by the TFP process using essentially power flow oriented fibre strands (2, 9), the method comprising the following steps:
a) the fibre strands (2, 9) are laid on a carrier layer (3) to create a fibre preform (1, 8), and are affixed with a locating thread (6), wherein the locating thread and/or the carrier layer are composed of a water soluble material and the fibre preform (1, 8) has an almost arbitrary material thickness;
b) at least one fibre preform (1,8) is placed in a locating apparatus after completion of the TFP process to ensure the position of the fibre strands (2, 9) within the at least one fibre preform (1, 8);
c) the locating apparatus is passed through by water as solvent to remove the at least one locating thread (6) and/or the at least one carrier layer (3) by dissolving and flushing out, wherein the water is guided and filtered by an inflow and an outflow through the locating apparatus in a closed circuit;
d) after removing the at least one locating thread (6) and/or removing the at least one carrier layer (3) the at least one fibre preform (1, 8) is dried in the locating apparatus by heat input; and
e) the at least one fibre preform (1, 8) is impregnated in the locating apparatus after requirements of the RTM process with an epoxy resin to provide the finished composite component.

2. The method according to Claim 1, **characterised in that** the at least one locating thread (6) and/or the at least one carrier layer (3) are made from the thread SOLVRON^{®} Sewing Thread SX 100T/1x3 or SOLVRON^{®} SF 62dtex.

3. The method according to Claim 1 or 2, **characterised in that** at least two fibre preforms (1, 8) being positioned in the locating apparatus to provide one multi-layered fibre preform.

## Revendications

1. Procédé de production d'ébauches fibreuses (1, 8) monocouches ou multicouches selon le procédé TFP comprenant essentiellement des brins de fibre (2, 9) orientés dans le flux de force, comportant les étapes suivantes :
a) les brins de fibre (2,9) sont déposés sur une couche de support (3) pour former une ébauche fibreuse (1, 8) et sont attachés par un fil de fixation (6), le fil de fixation et/ou la couche de support étant formés d'un matériau soluble dans l'eau et l'ébauche fibreuse (1, 8) présentant une épaisseur quasi quelconque,
b) au moins une ébauche fibreuse (1, 8) est introduite dans un dispositif de fixation, après la fin du procédé TFP, pour bloquer les brins de fibre (2, 9) dans leur position à l'intérieur d'au moins une ébauche fibreuse (1, 8),
c) l'eau en tant que solvant transite par le dispositif de fixation, afin de retirer par dissolution et par évacuation par rinçage au moins un fil de fixation (6) et/ou au moins une couche de support (3), l'eau étant guidée et filtrée dans un circuit fermé par l'intermédiaire d'une admission et d'une évacuation à travers le dispositif de fixation,
d) après le retrait d'au moins un fil de fixation (6) et/ou le retrait d'un moins une couche de support (3), au moins une ébauche fibreuse (1, 8) est séchée dans le dispositif de fixation par apport de chaleur, et
e) l'imprégnation d'au moins une ébauche fibreuse (1, 8) est effectuée dans le dispositif de fixation conformément au procédé RTM avec une résine époxyde destinée à la production de la structure composite finie.

2. Procédé selon la revendication 1, **caractérisé par le fait qu'**au moins un fil de fixation (6) et/ou au moins une couche de support (3) sont formés d'un fil SOLVRON® Sewing Thread SX 100T/1x3 ou SOLVRON® SF 62dtex.

3. Procédé selon la revendication 1 ou 2, **caractérisé par le fait qu'**au moins deux ébauches fibreuses (1,8) sont disposés dans le dispositif de fixation de façon à former une ébauche fibreuse multicouches.
